# EUROPÄISCHE PATENTSCHRIFT

(11) **EP 1 051 310 B1**
(45) Veröffentlichungstag und Bekanntmachung des Hinweises auf die Patenterteilung: **03.04.2002**
(21) Anmeldenummer: 98961006.8
(22) Anmeldetag: 13.10.1998
(51) Int. Cl.: B60R 11/02, G06F 1/16

(54) **AUTORADIO MIT EINEM ABNEHMBAREN BEDIENTEIL**
CAR RADIO WITH A REMOVABLE CONTROL PANEL
AUTORADIO DOTE D'UN ORGANE DE COMMANDE AMOVIBLE

(30) Priorität: 28.01.1998 DE 19803178
(43) Veröffentlichungstag der Anmeldung: 15.11.2000
(73) Patentinhaber: ROBERT BOSCH GMBH, 70442 Stuttgart (DE)
(72) Erfinder: WALL, Holger, D-30459 Hannover (DE)
(86) Internationale Anmeldenummer: DE9803009
(87) Internationale Veröffentlichungsnummer: WO9938728

(56) Entgegenhaltungen:
- EP-A- 0 640 511
- WO-A-97/19833
- DE-A- 4 228 605
- FR-A- 2 726 382
- US-A- 5 239 700

## Beschreibung

Die Erfindung betrifft ein Autoradio mit einem Empfangs- und Steuerteil sowie mit einem abnehmbaren Bedienteil.

Es ist bekannt, Autoradios mit einem abnehmbaren Bedienteil (Release Panel) zum Zwecke des Diebstahlschutzes auszubilden. Die Kappe des Autoradios oder Teile der Kappe können vom Benutzer mitgenommen werden, so daß das Autoradio für Dritte unbrauchbar wird. In der Praxis wird diese Kappe meist ins Handschuhfach oder unter den Sitz gelegt, da sie relativ groß ist und keine Nutzfunktion hat. Wird sie von einem potentiellen Dieb gefunden, ist die Idee des Diebstahlschutzes naturgemäß obsolet geworden. Das Konzept des Release Panels hat sich daher in der Praxis nur für solche Benutzerkreise bewährt, die die Nachteile des Transports des abgenommenen Bedienteils in Kauf nehmen und bei jedem Verlassen des Kraftfahrzeugs auch sorgfältig das Bedienteil abnehmen.

Ein gattungsgemässes Autoradio ist aus WO-A-9719833 bekannt.

Der vorliegenden Erfindung liegt die Problemstellung zugrunde, den Diebstahlschutz auf der Basis des abnehmbaren Bedienteils attraktiver - und damit wirksamer - zu gestalten.

Diese Problem wird bei dem gattungsgemäßen Autoradio erfindungsgemäß mit den kennzeichnenden Merkmalen des Anspruchs 1 gelöst.

Durch die erfindungsgemäße Ausgestaltung des abnehmbaren Bedienteils kann dieses als eine persönliche Datenbank und ein persönlicher Terminkalender benutzt werden. Derartige Geräte sind unter der Bezeichnung PDA (Personal Digital Assistent) bereits bekannt. Durch die erfindungsgemäße Ausbildung des Bedienteils erhält das abgenommene Bedienteil eine eigene Funktionalität, wodurch der Anreiz, das Bedienteil abzunehmen und mit sich zu führen naturgemäß erhöht wird.

Das erfindungsgemäße Konzept des durch einen eigenen Mikroprozessor intelligent ausgestalteten Bedienteils ermöglicht auch die Übernahme von Funktionen durch das Bedienteil, die bisher vom Prozessor des Autoradios erledigt werden mußten, beispielsweise die Abspeicherung von persönlichen Senderbelegungen von Stationstasten bzw. Bedienflächen zum Abruf von vorgespeicherten Sendern.

Besonders zweckmäßig ist es, wenn die Datenschnittstelle des Bedienteils als eine herkömmliche Schnittstelle für einen Computer ausgebildet ist. In diesem Fall kann das Bedienteil über einen Computer, beispielsweise einen PC, mit den benötigten Daten geladen werden. Ist dabei das Autoradiogerät als ein Multifunktionsgerät, beispielsweise durch die Verbindung mit einem Bordcomputer, einer Navigationseinrichtung und/oder einem Funktelefon ausgestattet, lassen sich durch das erfindungsgemäße Bedienteil als tragbare Schnittstelle besondere Funktionalitäten realisieren, die die Bedienung erleichtern. So ist es beispielsweise denkbar, in das Bedienteil von einem Servicecomputer beispielsweise über das Internet abgerufene Verkehrsinformationen abzurufen und über die Datenschnittstelle in das mit dem Autoradio verbundene Navigationssystem einzuspeisen, um die aktuellen Verkehrsinformationen bei der Navigation berücksichtigen zu können.

Es ist auch denkbar, außer Daten und Terminen die Bedienoberfläche für das Radio vom PC zu laden oder diese direkt am Bedienteil durch den Benutzer, seinen Wünschen entsprechend, zu modifizieren.

Für die Verbindung des abnehmbaren Bedienteils zum Computer kann zweckmäßigerweise ein Adapter vorgesehen werden, der als Docking-Station des abgenommenen Bedienteils an den Computer dient.

Ist das Autoradio mit einer Funktelefoneinrichtung verbunden, kann der Datenabgleich für das Bedienteil auch über eine Funktelefonverbindung mit einem Computer erfolgen, so daß aktualisierte Daten vom Computer über die Funktelefoneinrichtung abgerufen werden können.

Das abnehmbare Bedienteil kann zweckmäßigerweise mit einem durch einen Touch Screen gebildeten Display ausgestaltet sein, so daß Bedieneingaben direkt über das Display möglich sind. Zusätzlich kann das Bedienteil mit wenigen Bedienknöpfen ausgestattet sein, die in erster Linie zur Funktionsauswahl, ggf. aber auch für einzelne manuelle Eingaben, benutzt werden können.

Die Erfindung soll im folgenden anhand eines in der Zeichnung dargestellten Ausführungsbeispiels näher erläutert werden. Es zeigen:
- Figur 1 -: eine Ansicht einer Bedienfront eines Autoradios nach einem Ausführungsbeispiel der Erfindung
- Figur 2 -: die Ansicht gemäß Figur 1 mit dem abgenommenen Bedienteil
- Figur 3 -: eine schematische Darstellung einer Verbindung des abgenommenen Bedienteils über einen Adapter zu einem PC
- Figur 4 -: ein prinzipielles Funktionsschaltbild für ein mit einem erfindungsgemäßen Bedienteil ausgestattetes Autoradio.

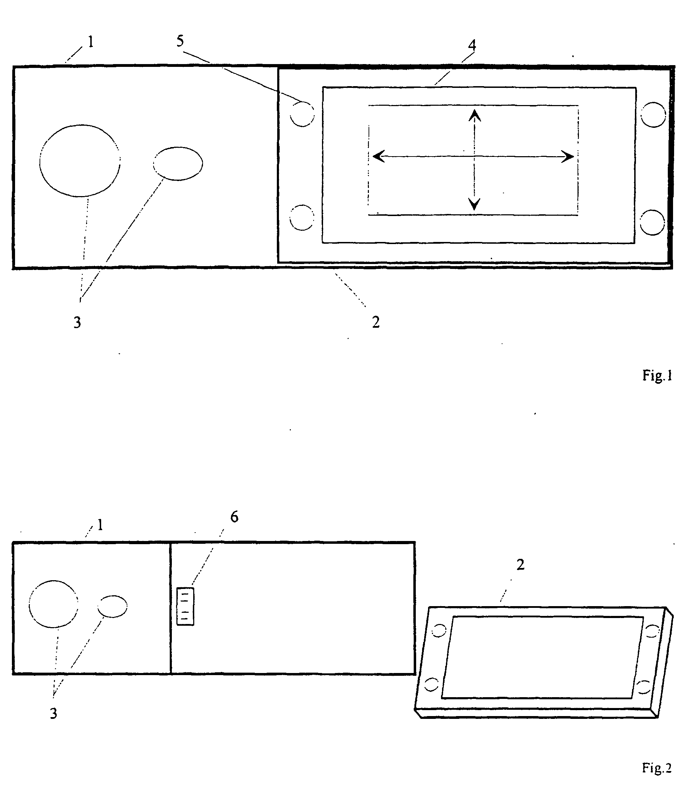

Figur 1 läßt eine Bedienfront eines Autoradios 1 erkennen, auf der sich ein abnehmbares Bedienteil 2 und zusätzliche, für das Autoradio spezifische Bedienelemente 3 befinden. Das abnehmbare Bedienteil 2 weist ein Display 4 auf, das als Touch Screen ausgebildet ist und somit Cursor-Steuerfunktionen ermöglicht, wie dies an den eingezeichneten Pfeilen zum Ausdruck gebracht worden ist. Ferner weist das abnehmbare Bedienteil 2 Bedienknöpfe 5 auf, die seitlich des Displays 4 angeordnet sind.

Figur 2 läßt das abgenommene Bedienteil 2 erkennen, das mit dem Autoradio über Kontakte 6 einer Datenschnittstelle verbindbar ist.

Erfindungsgemäß ist das abnehmbare Bedienteil 2 mit eigenen elektronischen Speichern und einem eigenen Mikroprozessor ausgestattet, so daß es die Funktion eines PDA (Personal Digital Assistent) ausüben kann.

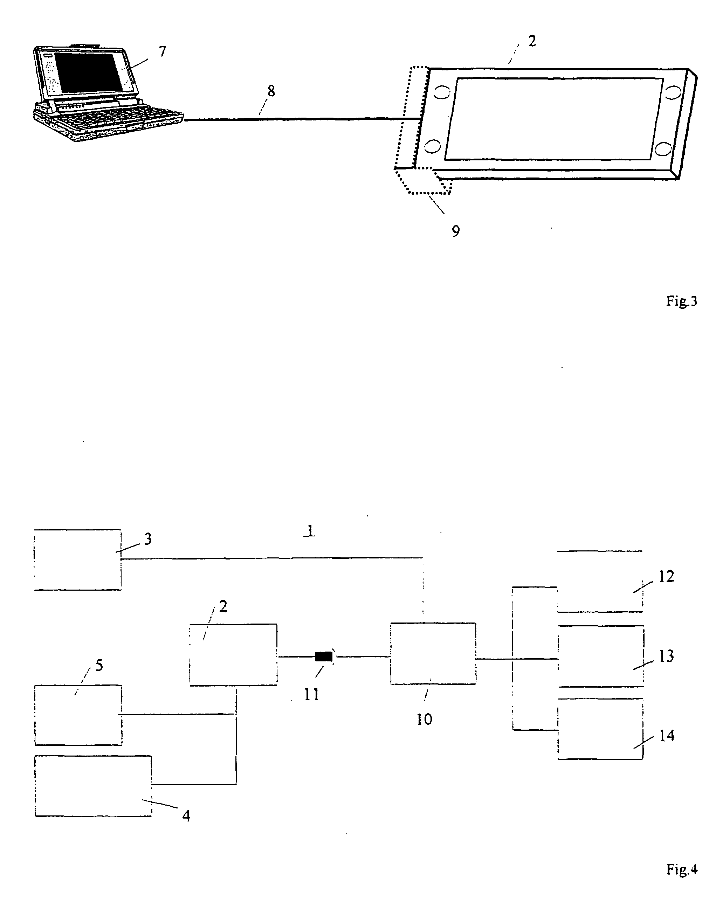

In die elektronischen Speicher des abnehmbaren Bedienteils 2 können Daten beispielsweise von einem PC 7 heruntergeladen werden, wie dies in Figur 3 verdeutlicht ist. Über ein Schnittstellenkabel 8 kann die Datenschnittstelle des abnehmbaren Bedienteils 2 mit dem PC 7 entweder direkt oder über einen als Docking-Station fungierenden Adapter 9 angeschlossen werden. Auf diese Weise können beispielsweise Bedienprogramme für das Autoradio, die mit den Daten- und Terminfunktionen des abnehmbaren Bedienteils 2 gekoppelt sein können, in das abnehmbare Bedienteil 2 heruntergeladen werden.

Figur 4 zeigt schematisch die Funktionsteile des erfindungsgemäßen Autoradios 1, dessen Geräteprozessor 10 direkt durch die Bedienelemente 3 oder über eine Datenschnittstelle 11 durch das abnehmbare Bedienteil 2 steuerbar bzw. beeinflußbar ist. Der Mikroprozessor steuert die steuerbaren Teile des Autoradios 1, wie Tuner 12, Verstärker 13 und etwaige Zusatzeinrichtungen 14.

Das abnehmbare Bedienteil 2 kann manuell durch die Bedienknöpfe 5 und/oder das als Touch Screen ausgebildete Display 4 gesteuert werden.

Durch das erfindungsgemäße abnehmbare Bedienteil 2 können somit Autoradiofunktionen oder Funktionen von mit dem Autoradio verbundenen Einrichtungen programmiert werden. Darüber hinaus kann das abnehmbare Bedienteil 2 im abgenommenen Zustand eigene Funktionalitäten aufweisen, insbesondere die eines PDA, wodurch die Attraktivität für die Abnahme des Bedienteils 2 vom Autoradio 1 - und damit der angestrebte Diebstahlsschutzzweck - entscheidend vergrößert wird.

## Patentansprüche

1. Autoradio mit einem Empfangs- und Steuerteil (10, 12, 13, 14) sowie mit einem abnehmbaren Bedienteil (2), das mit einem Display (4), einem Mikroprozessor und elektronischen Speichern ausgestattet und über eine Datenschnittstelle (11) mit dem Empfangs- und Steuerteil (10, 12, 13, 14) verbindbar ist, wobei der Mikroprozessor des Bedienteils (2) zur Durchführung eines Teils der Bediensteuerung des Empfangs- und Steuerteils (10, 12, 13, 14) programmiert ist, und in das Bedienteil (2) die Bedienoberfläche des Autoradios geladen ist, **dadurch gekennzeichnet, daß** das als eine persönliche Datenbank und als ein persönlicher Terminkalender benutzbar ist.

2. Autoradio nach Anspruch 1, **dadurch gekennzeichnet, daß** die Datenschnittstelle (11) als eine herkömmliche Schnittstelle für einen Computer (7) ausgebildet ist.

3. Autoradio nach Anspruch 1 oder 2, **gekennzeichnet durch** einen Adapter (9) zur Herstellung einer Datenverbindung zwischen dem Bedienteil (2) und einem Computer (7) über die Datenschnittstelle (11) des Bedienteils (2).

4. Autoradio nach Anspruch 2 oder 3, **dadurch gekennzeichnet, daß** das Bedienteil (2) zum Abgleich der in den elektronischen Speichern gespeicherten Daten mit dem mit ihm verbundenen Computer (7) eingerichtet ist.

5. Autoradio nach Anspruch 4, **dadurch gekennzeichnet, daß** das Bedienteil (2) über das Empfangs- und Steuerteil (10) mit einer Funktelefoneinrichtung und über diese mit einem Computer (7) verbindbar ist.

6. Autoradio nach einem der Ansprüche 1 bis 5, **dadurch gekennzeichnet, daß** das Display (4) durch eine Ausbildung als Touch Screen als Eingabevorrichtung eingerichtet ist.

## Claims

1. Car radio having a reception and control part (10, 12, 13, 14) and having a removable operating part (2) which is equipped with a display (4), a microprocessor and electronic memories and can be connected to the reception and control part (10, 12, 13, 14) via a data interface (11), the microprocessor of the operating part (2) being programmed to carry out some of the operating control of the reception and control part (10, 12, 13, 14), and the user interface of the car radio being loaded into the operating part (2), **characterized in that** the operating part can be used as a personal database and as a personal appointments diary.

2. Car radio according to Claim 1, **characterized in that** the data interface (11) is in the form of a conventional interface for a computer (7).

3. Car radio according to Claim 1 or 2, **characterized by** an adapter (9) for setting up a data link between the operating part (2) and a computer (7) via the data interface (11) of the operating part (2).

4. Car radio according to Claim 2 or 3, **characterized in that** the operating part (2) is set up to align the data stored in the electronic memories with the computer (7) connected to said operating part.

5. Car radio according to Claim 4, **characterized in that** the operating part (2) can be connected to a radio telephone device via the reception and control part (20) and to a computer (7) via said radio telephone device.

6. Car radio according to one of Claims 1 to 5, **characterized in that** the display (4) is set up as an input apparatus by being in the form of a touchscreen.

## Revendications

1. Autoradio comportant une partie de réception et une partie de commande (10, 12, 13, 14) ainsi qu'une pièce de service amovible (2), comprenant un afficheur (4) un microprocesseur et des mémoires électroniques et pouvant être relié par une interface de données (11) à la partie de réception et commande (10, 12, 13, 14), dans lequel le microprocesseur de la pièce de service (2) est programmé pour exécuter une partie de la commande de service de la pièce de réception et de commande (10, 12, 13, 14), et dans la pièce de service (2) on charge la surface de service de l'autoradio,
**caractérisé en ce que**
la pièce de service est utilisable comme banque de données personnelle et comme agenda personnel.

2. Autoradio selon la revendication 1,
**caractérisé en ce que**
l'interface de données (11) est une interface usuelle pour un ordinateur (7).

3. Autoradio selon l'une quelconque des revendications 1 ou 2,
**caractérisé en ce qu'**
un adaptateur (9) est prévu pour réaliser une liaison de données entre la pièce de service (2) et un ordinateur (7) par l'intermédiaire de l'interface de données (11) de la pièce de service (2).

4. Autoradio selon l'une quelconque des revendications 2 ou 3,
**caractérisé en ce que**
la pièce de service (2) est conçue pour compenser les données mémorisées dans les mémoires électroniques avec l'ordinateur auquel il est relié.

5. Autoradio selon la revendication 4,
**caractérisé en ce que**
la pièce de service (2) est reliée par la partie de réception et de commande (10) à une installation de radiotéléphone et par celle-ci à un ordinateur (7).

6. Autoradio selon l'une quelconque des revendications 1 à 5,
**caractérisé en ce que**
l'afficheur (4) est un dispositif d'entrée par sa réalisation comme écran tactile.
